# EUROPEAN PATENT APPLICATION

(11) **EP 1 489 311 A1**
(43) Date of publication of application: **22.12.2004**
(21) Application number: 03013382.1
(22) Date of filing: 18.06.2003
(51) Int. Cl.: F16B 21/18

(54) **Snap circlip ring element**

(71) Applicant: BorgWarner Inc., Auburn Hills, Michigan 48326-1782 (US)
(72) Inventor: Jung, Martin, Flörsheim-Dalsheim, 67592 Alzey (DE); Dücker, Thomas, Bobenheim-Roxheim, 67240 Ludwigshafen (DE)
(74) Representative: Pautex Schneider, Nicole

(57) **Abstract**

The present invention relates to a snap element (1;20) comprising two end portions (3a,3b) facing each other and a ring or a cylinder body (2,23) extending in essentially circular configuration between the two end portions.

The ring or cylinder bodies (2,23) do not have exactly circular resp. cylindrical configurations, but a serpentine shape.

This has the advantage, that the linear length of the snap elements along their periphery is longer than an exact circular contour, and this results in an increase of the flexibility of the snap element for tightening or expanding the ring.

## Description

### BACKGROUND OF THE INVENTION

The present invention relates to a snap element according to the preamble of claim 1.

Snap rings are known for use to axially fasten two elements in a desired position to one another, whereas said two elements comprise an inner and an outer element such as a shaft within a cylinder, while permitting rotation of said elements relatively to each other.

The snap ring typically comprises an open ring having two end portions essentially facing each other and a ring portion of more or less than 360 degrees, extending between said two end portions in an essentially circular configuration. The snap element is typically made of a material having limited flexibility such as metal, whereby said snap ring is configured so as to be insertable with its inner circumference into an outer ring groove of said inner one of said two elements to be axially fastened to one another, and with its outer circumference into a ring groove of said outer element when said two elements are axially positioned to each other so that the two ring grooves lie in one and the same plane.

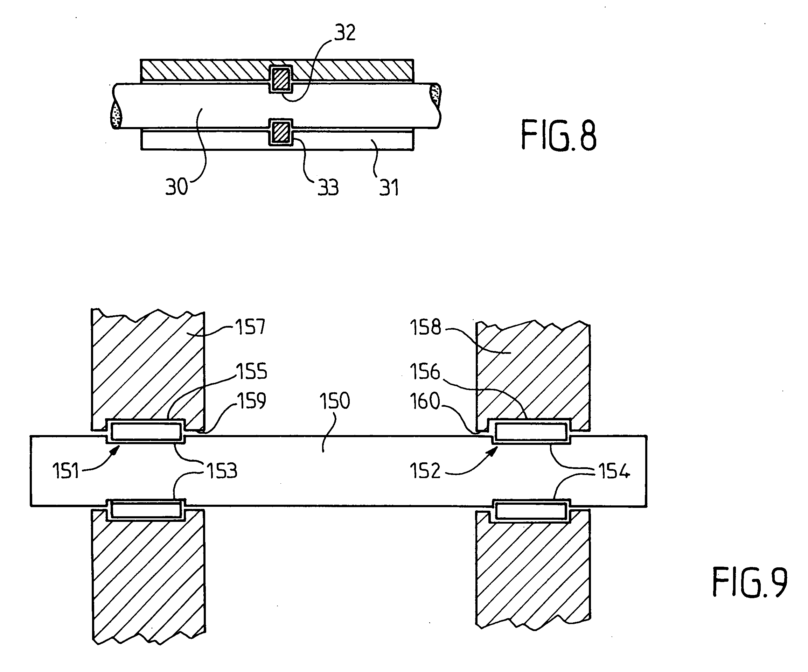

German Patent no. 463 684 discloses a snap ring according to the above defmed prior art, and is illustrated as Fig. 7 hereinafter.

In this patent a snap ring is described having two end portions with one eye each, as well as a ring portion extending from one end portion to the other in essentially circular configuration, describing an open circle of less than 360 degrees.

The material, probably steel, has a limited flexibility, so that the ring may be somewhat opened or closed in order to fit the ring into a ring groove which may, cooperate either with the outer or with the inner periphery of the ring, or with both.

In order to provide a particular flexibility characteristic of the ring, the radial thickness of the ring varies from a largest value at the center of the ring between the two end portions to its smallest values close to the end portion.

However, this type of snap ring is limited to cooperation with components whereof the outer diameter does not significantly exceed the opening of the ring so as to stay within the range of elasticity of the ring material when it is forced open in order to let the grooved element pass inside the ring. It is of course possible to provide a wider opening of a snap ring in order to pass larger elements into the ring, however, this endangers the security of operation of the snap ring because the non covered angle out of the 360 degrees of a full circle becomes bigger therewith.

Likewise, it is limited to cooperation with hollow components having an inner groove, whereas the inner diameter of the element must not be smaller than the outer diameter of the snap ring in its most bent condition.

### OBJECT OF THE INVENTION

It is one object of the present invention to create a snap element, such as a snap ring, but not limited to what is typically considered as a ring, i.e. an element of relatively flat configuration, which considerably increases its applicability to various geometries of components which it is to axially fasten to one another, in providing a high degree of elasticity, while providing simultaneously high resistance and security against separation of the components it is supposed to fasten to one another.

### SUMMARY OF THE INVENTION

This objective is achieved with a snap element of the type defined herein above, which is further characterized by the fact that the ring element between the two end portions of the snap element comprises a serpentine configuration.

This serpentine configuration, the term serpentine, especially for its meaning in appended claim 1, is to be understood as including any type of shape such as meandering or the like, even with edges, results in an increased flexibility of the snap element.

Further objectives and advantages will become apparent further below.

According to one aspect of the invention, a snap ring can be used to axially fasten two elements in a desired, defined position to one another, whereas said two elements comprise an inner and an outer element such as a shaft within a cylinder, while permitting rotation of said elements relatively to each other, wherein said ring body extends over an angle of more or less than 360 degrees.

According to another aspect of the invention said two elements may be two cylinders located in axially different position around a shaft, whereas the snap element is located axially between said two elements.

The linear length of the ring body may be essentially longer than the theoretical periphery of a circle corresponding to the average diameter of the snap element.

The snap element of any one of claims 1 to 4, wherein the axial dimension of the snap element is approximately comparable with, smaller or larger than the wall thickness of the snap element.

According to another aspect of the invention, the snap element may have an axial length smaller, longer or comparable with the outer diameter of the snap element

Another aspect of the invention is that the snap element may be directly or indirectly held in position by tappets or brackets.

According to a further aspect of the invention, the cross section of the snap ring may be rectangular, trapezoidal, curvilinear, round or a combination thereof.

According to still another aspect of the invention, the side surfaces of the snap ring may include offset areas of any configuration in order to create hydro- or aerodynamic thrust bearings. This may especially be of advantage in a case where ring grooves exist only either in the one or in the other element to be axially fixed to each other.

Finally, a last aspect of the invention relates to the use of a snap ring as spacer between bearing cylinders in a turbocharger, wherein said snap element is held in axial position on a turbine shaft by means of a peripheral groove in the bearing housing, or by means of a peripheral groove in the turbine shaft or by both, or by no groove at all under the elastic forces of the snap element which press the snap element against the wall of a cylindrical axial boring in the bearing housing.

### BRIEF DESCRIPTION OF THE DRAWINGS

The invention is described with references to the appended drawing, whereof:
Fig. 1 is a perspective vie of a snap element according to a first embodiment of the invention,
Fig. 2 is an elevational view of the snap element according to Fig. 1,
Fig. 3 is a plane view of the snap element of Fig. 1,
Fig. 4 is a perspective view of a second embodiment of the snap element according to the present invention,
Fig. 5 is a plane view of the snap element of Fig. 4,
Fig. 6 is an elevational view of the snap element of Fig. 4,
Fig. 7 is a snap ring according to the prior art,
Fig. 8 illustrates the axial fixation of two components by a snap element according to the present invention,
Fig. 9 illustrates schematically the use of two snap elements according to the second embodiment of the invention as bushings/bearings of the turbine shaft of a turbo charger, and
Fig. 10 illustrates the use of a snap ring according to the present invention as distance holder between two bearings in a turbocharger, whereby the bearings may also be or may not be of the same configuration as in Fig. 9, i.e. in the form of a snap element according to the present invention.

### DETAILED DESPCRIPTION OF THE INVENTION

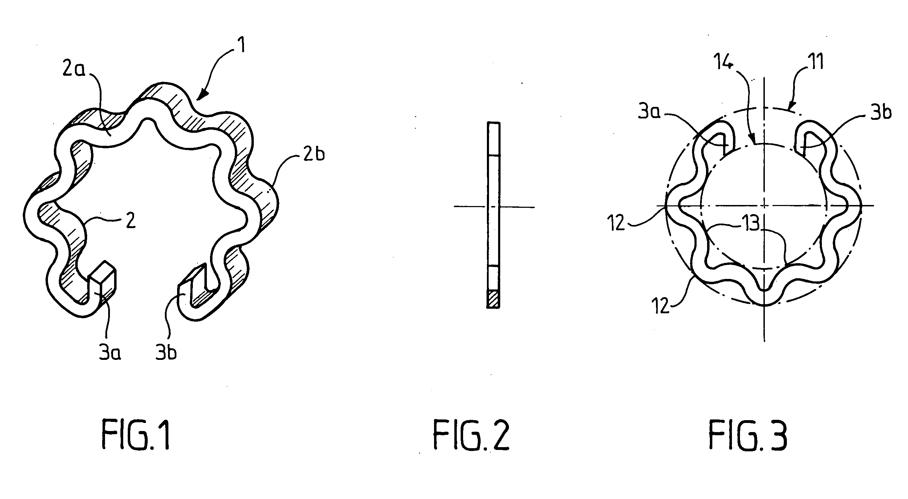

Fig. 1 illustrates a snap ring 1 according to the present invention. Snap ring 1 comprises an essentially ring shaped body 2 having two parallel surfaces, a front face 2a and a not shown rear face 2b.

The essentially ring shaped body 2 has a profiled configuration and is axially delimited by said two faces 2a and 2b.

Departing from a perfectly circular configuration of snap rings of the prior art, the snap ring of the invention comprises a configuration of serpentine form, wherein the two end portions 3a and 3b are , as illustrated, bent inwardly, but they may, of course, also be bent outwardly.

As can be seen in Fig. 3, illustrating a plane view of the snap ring of Fig. 1, the outermost points 12 of the outer contour of the serpentine body are inscribed within an outer circle 11, wherein the innermost points 13 of the inner contour of the ring body sit on a circle 14.

The end portions 3a and 3b of the snap ring 1 are bent inwardly so as to extend from the outer ring 11 until the inner ring 14 and are, in the indicated example, parallel to each other. As indicated above, the end portions 3a and 3b may also be bent outwardly and in this case they would extend from inner ring 14 to outer ring 11. In both cases they may have any configuration.

Fig. 2 illustrates an elevational view of the snap ring of Fig. 1

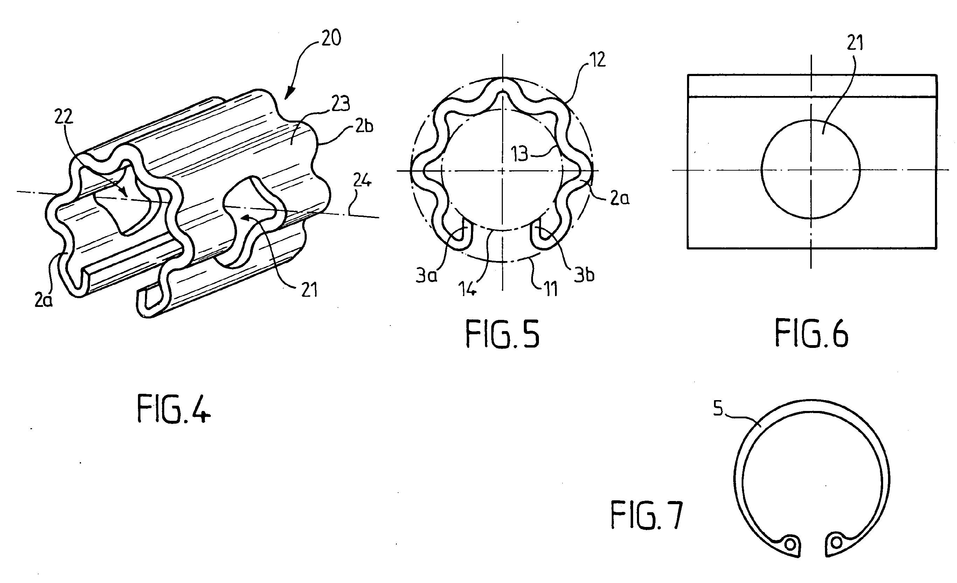

In a second embodiment of the present invention as illustrated in Fig. 4, the snap element 20 does not have a ring configuration but an axially extended configuration, whereas the axial dimension of the snap element is much bigger than the wall thickness of the snap element.

The snap element of Fig. 4 comprises two additional openings 21 and 22 for a particular purpose related to a specific application of the snap element as described herein further below.

Further the snap ring of Fig. 4 comprises side surfaces 2a and 2b which may, in non-illustrated manner, comprise offset areas of any configuration which, in an employment of the snap ring according to Fig. 9 below, may form hydro-or aerodynamic thrust bearings.

Fig. 5 again illustrates a plane (or axial) view of the snap element of Fig. 4 and Fig. 6 is an elevational view thereof taken in radial direction along an axis common to the two circular openings 21 and 22.

Fig.8 is a schematic illustration of an axial fixation of a shaft 30 within a cylinder 31, whereby the shaft 30 has a ring groove 32 and the cylinder has a ring groove 33.

Shaft 30 and cylinder 31 are axially aligned so that the two grooves 32 and 33 lie in the same plane, and the presence of the snap element according to the present invention within both grooves results in the impossibility of a relative axial movement between shaft and cylinder.

Assembly of shaft, cylinder and snap element may be carried out in one of two ways, either the snap element is first inserted into the groove 32 of the shaft and held in tight engagement therewith so as to practically totally disappear within the groove 32 (for reasons of simplicity the necessary depth of the groove has not been designed in the proper dimensions), and the shaft with the embedded snap element is inserted into the cylinder while maintaining the snap element in its tight condition at least until the snap element has entered the axial boring in the cylinder.

The other possibility is to insert the snap element into the groove 33 in the cylinder, and keep it expanded so as to practically entirely disappear with groove 33, whereafter the shaft may be inserted into the axial boring of the cylinder, and in both cases the snap element would snap into place as soon as the two grooves are in the same plane.

Fig. 9 is a very schematic illustration of a bearing of the turbine shaft of a turbocharger. One end of the shaft would typically carry the turbine wheel of the turbocharger, and the other end would typically carry the compressor wheel of the turbocharger.

Reference number 150 depicts the turbine shaft of a turbocharger. This shaft is supported in two bearings 151 and 152. Both of these bearings consist of snap elements according to Fig. 4 hereinabove, and are received within ring grooves 153 and 154 in the turbine shaft, as well as in ring grooves 155 and 156 of housing portions 157 and 158 of the not shown turbocharger housing.

The snap elements are configured such that their inner diameter (corresponding to circle 14 in Fig. 5) is slightly larger than the diameter of the bottom of ring grooves 153 and 154, whereas their outer diameters are smaller than the diameter of the bottom of ring grooves 155 and 156 in the housing portions 157 and 158.

Of course it is possible, to provide ring grooves of the type 153 and 155 respectively only either in the housing portions or in the turbine shaft and have other means to axially fix the shaft with regard to the housing portions.

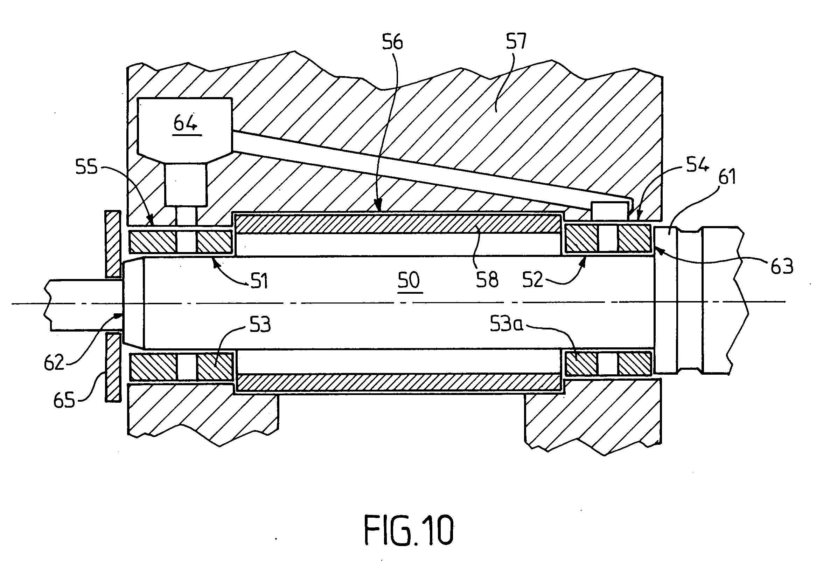

Fig. 10 is a very schematic illustration of a bearing of the turbine shaft of a turbo charger. One end of the shaft would typically carry the turbine wheel of the turbocharger and the other end would typically carry the compressor wheel of the turbocharger.

Reference number 50 depicts the turbine shaft of a turbocharger. This shaft is supported in two bearings 51 and 52. Both of these bearings consist of cylinders 53, 53a which are received in cylindrical borings 54, 55 in the bearing housing 57 of a turbocharger.

The turbine shaft 50 has a portion 61 with larger diameter than the center portion carrying the two bearings 51 and 52, as well as another portion of smaller diameter than the center portion.

The smaller diameter portion of the shaft is separated from the center portion by shoulder 62 and the larger diameter portion is separated from the center portion by shoulder 63.

Bearing cylinder 53a is held in position between shoulder portion 63 on one side and by one end of a cylindrical element 58 on the other side, and bearing cylinder 53 is held in position between the other end of cylindrical element 58 on one side and by a ring 65 on the other side.

This ring 65 abuts on shoulder 62 of the turbine shaft and is fastened by any non-illustrated means to turbine housing 57 in a position as to hold the two bearing cylinders 53, 53a and cylindrical element 58 close together in axial direction, however while allowing for a certain tolerance in order to permit all three elements to freely rotate.

The cylindrical element 58 is of a type as illustrated in Fig. 4, having a relatively large axial extension compared to its radial dimension. It may have, as in Fig. 4, lateral holes for the flow of lubrication fluid.

The outer diameter of the cylindrical element 58 is, in its rest position, larger than the diameter of boring 56 in the bearing housing 57 which axially locates element 58.

In order to be fit into the radial groove which is formed by boring 56, the element 58 is circumferentially contracted in order to decrease in diameter, slipped into the groove and after re-expansion it snugly fits against the outer ring wall formed by bearing 56.

Compared with snap elements of the prior art, the snap elements of the present invention provide the advantage of greatly enhanced elasticity due to the increased total length of the ring body 2 between the end portions 3a and 3b as well as for their serpentine shape which favors bending, whereas the snap elements may be wide opened in order to snap around the shaft while maintaining a relatively small opening in their relaxed condition.

While the snap element as shown in Figs. 1-3 and 8 are typically employed in situations where two members, arranged one around the other, have to be axially fixed to each other, the snap element according to Fig. 4 and 10 may be used to hold two cylinders, otherwise freely floating on a shaft in a defined distance from each other, whereby the snap element would simply define a minimum distance between the two floating cylinders, playing the role of a spacer, whereas, if means are provided to limit axial movement of the cylinders away from each other, the arrangement will produce a direct axial fixation in a particular position, of the two cylinders.

Element 58 is illustrated in Fig. 10 in form of an axial cut, having a rectangular shaped cross section. This has to be understood as an example, it being understood, that the cross section of the snap element may have any desired shape, round, trapezoidal, curvilinear or combinations thereof.

In Fig. 10, the turbocharger bearing using a snap element according to the present invention as spacer between the two bearing cylinders 53 and 53a, is designed so that the bearing housing is provided with a groove 56 which locates the snap element 58 in a definite axial position.

It is also imaginable, that the groove is located in the turbine shaft or that both, turbine shaft and bearing housing are provided with grooves.

Alternatively, no groove at all may be provided, where the force of the snap element to return into its resting position, once it has been contracted to fit into the boring of the bearing housing, is sufficient to hold the snap element."

## Claims

1. A snap element (1) comprising an open ring, having an essentially circular ring body (2) extending between ends (3a, 3b) facing each other, wherein said ring body comprises a serpentine configuration.

2. The snap element of claim 1, for use to axially fasten two elements (30, 31) in a desired, defined position to one another, whereas said two elements (30, 31) comprise an inner (30) and an outer element (31) such as a shaft within a cylinder, while permitting rotation of said elements relatively to each other, wherein said ring body (2) extends over an angle of more or less than 360 degrees.

3. The snap element of claim 1, for use to axially fasten two elements (53, 53a in a desired, defined position to one another, whereas said two elements (53, 53a) comprise two cylinders located in axially different position around a shaft (50), whereas the snap element (58) is located axially between said two elements.

4. The snap element of any one of claims 1 to 3, wherein the linear length of the ring body (2) is essentially longer than the theoretical periphery of a circle corresponding to the average diameter of the snap element.

5. The snap element of any one of claims 1 to 4, wherein the axial dimension of the snap element is approximately comparable with, smaller or larger than the wall thickness of the snap element.

6. The snap element of any one of claims 1 to 4, wherein the axial length of the snap element is smaller, longer or comparable with the outer diameter of the snap element

7. The snap element of any one of claims 1-6, wherein said snap element may be directly or indirectly held in position by tappets or brackets.

8. The snap ring of any one of claims 1-7, wherein the cross section of the snap ring is rectangular, trapezoidal, curvilinear, round or a combination thereof.

9. The snap element of any one of claims 1-8, wherein the side surfaces (2a, 2b) include offset areas of any configuration in order to create hydro- or aerodynamic thrust bearings.

10. Use of the snap element of any one of claims 1-9 as spacer between bearing cylinders in a turbocharger, **characterized in that** said snap element is held in axial position on a turbine shaft (50) by means of a peripheral groove (56) in the bearing housing, or by means of a peripheral groove in the turbine shaft (50) or by both, or by no groove at all under the elastic forces of the snap element (58) which press the snap element against the wall of a cylindrical axial boring in the bearing housing.
